# EUROPÄISCHE PATENTSCHRIFT

(11) **EP 3 251 909 B1**
(45) Veröffentlichungstag und Bekanntmachung des Hinweises auf die Patenterteilung: **30.08.2023**
(21) Anmeldenummer: 17170959.5
(22) Anmeldetag: 15.05.2017
(51) Int. Cl.: B60W 30/08, B60W 30/09

(54) **VERFAHREN ZUM BETREIBEN EINES FAHRERASSISTENZSYSTEMS EINES KRAFTFAHRZEUGS MIT VORGABE EINES BLOCKIERTEN LENKWINKELBEREICHS, FAHRERASSISTENZSYSTEM SOWIE KRAFTFAHRZEUG**
METHOD FOR OPERATING A DRIVER ASSISTANCE SYSTEM OF A MOTOR VEHICLE WITH PROVISION OF A BLOCKED STEERING ANGLE RANGE, DRIVER ASSISTANCE SYSTEM AND MOTOR VEHICLE
PROCÉDÉ DE FONCTIONNEMENT D'UN SYSTÈME D'ASSISTANCE AU CONDUCTEUR D'UN VÉHICULE AUTOMOBILE AVEC UNE PRÉDÉFINITIN D'UNE ZONE D'ANGLE DE BRAQUAGE BLOQUÉ, SYSTÈME D'ASSISTANCE AU CONDUCTEUR ET VÉHICULE AUTOMOBILE

(30) Priorität: 30.05.2016 DE 102016109855
(43) Veröffentlichungstag der Anmeldung: 06.12.2017
(73) Patentinhaber: Valeo Schalter und Sensoren GmbH, 74321 Bietigheim-Bissingen (DE)
(72) Erfinder: Maraslis, Christos, 74321 Bietigheim-Bissingen (DE); Thunert, Fabian, 74321 Bietigheim-Bissingen (DE); Guechai, Wael, 74321 Bietigheim-Bissingen (DE)
(74) Vertreter: Pothmann, Karsten

(56) Entgegenhaltungen:
- DE-A1- 10 336 638
- DE-A1-102005 023 832
- DE-A1-102010 045 694
- DE-A1-102011 100 615
- DE-A1-102013 223 377

## Beschreibung

Die vorliegende Erfindung betrifft ein Verfahren zum Betreiben eines Fahrerassistenzsystems eines Kraftfahrzeugs, bei welchem zumindest ein Objekt in einer Umgebung des Kraftfahrzeugs erfasst wird, fortlaufend eine Position und eine räumliche Abmessung des zumindest einen Objekts bestimmt werden, und das Fahrerassistenzsystem in Abhängigkeit von der Position und der räumlichen Abmessung des zumindest einen Objekts betrieben wird. Darüber hinaus betrifft die vorliegende Erfindung ein Fahrerassistenzsystem für ein Kraftfahrzeug. Schließlich betrifft die vorliegende Erfindung ein Kraftfahrzeug.

Das Interesse richtet sich vorliegend insbesondere auf Fahrerassistenzsysteme, welche dazu dienen, einen Fahrer beim Führen des Kraftfahrzeugs zu unterstützen. Aus dem Stand der Technik sind beispielsweise Fahrerassistenzsysteme bekannt, mit denen Objekte in der Umgebung des Kraftfahrzeugs erfasst werden können. Zu diesem Zweck kann das Fahrerassistenzsystem beispielsweise entsprechende Sensoren aufweisen, mit denen die Position der Objekte bzw. die relative Lage zwischen dem Kraftfahrzeug und den Objekten bestimmt werden kann. Darüber hinaus können räumliche Abmessungen der Objekte mit Hilfe der Sensoren bestimmt werden. Dabei ist es auch bekannt, dass die erfassten Objekte in eine digitale Umgebungskarte eingetragen werden, welche die Umgebung des Kraftfahrzeugs beschreibt. Hierbei können die Objekte beispielsweise als Punkte, als Linien, als Kästen oder dergleichen gespeichert werden.

Darüber hinaus sind aus dem Stand der Technik Fahrerassistenzsysteme bekannt, welche zur Vermeidung einer Kollision des Kraftfahrzeugs dienen. Solche Fahrerassistenzsysteme können beispielsweise als automatisches Notbremssystem ausgebildet sind, mit denen das Kraftfahrzeug bei einer drohenden Kollision mit einem Objekt automatisch abgebremst werden kann. Ferner sind Fahrerassistenzsysteme bekannt, welche aktiv in die Lenkung des Kraftfahrzeugs eingreifen, damit einem Objekt ausgewichen werden kann. Auf diese Weise kann eine Kollision mit dem Objekt verhindert werden bzw. zumindest die Schwere der Kollision vermindert werden. Wenn mehrere Objekte in der Umgebung des Kraftfahrzeugs erkannt werden, ergibt sich üblicherweise der Nachteil, dass bei Fahrerassistenzsystemen zur Kollisionsvermeidung jedes der Objekte einzeln berücksichtigt werden muss. Bei einer großen Anzahl von Objekten kann der Rechenaufwand daher sehr groß werden, auch wenn die jeweilige Funktion nicht alle Eigenschaften des Objekts benötigt. Um den Rechenaufwand zu minimieren, ist es bekannt, dass der betrachtete Bereich in der Umgebung des Kraftfahrzeugs beschränkt wird. Dies kann aber den Nachteil mit sich bringen, dass nicht alle Objekte in der Umgebung berücksichtigt werden. Des Weiteren geht der Gesamtüberblick verloren, da alle Objekte üblicherweise einzeln berücksichtigt werden. Die Kombination von mehreren Objekten, um beispielsweise einen kollisionsfreien Pfad zu finden, erfordert weitere Rechenschritte.

DE 10 2005 023 832 A1 offenbart ein System zu Vermeidung einer Kollision mit einem Objekt, bei welchem Beschleunigungs-Lenkwinkel-Kombinationen für einen sicheren Fahrzustand ermittelt werden.

Es ist Aufgabe der vorliegenden Erfindung, eine Lösung aufzuzeigen, wie ein Fahrerassistenzsystem eines Kraftfahrzeugs in Abhängigkeit von Objekten in der Umgebung des Kraftfahrzeugs auf einfache Weise sicherer und zuverlässiger betrieben werden kann.

Diese Aufgabe wird erfindungsgemäß durch ein Verfahren, durch ein Fahrerassistenzsystem sowie durch ein Kraftfahrzeug mit den Merkmalen gemäß den jeweiligen unabhängigen Ansprüchen gelöst. Vorteilhafte Weiterbildungen der vorliegenden Erfindung sind Gegenstand der abhängigen Ansprüche.

Bei einer Ausführungsform eines Verfahrens zum Betreiben eines Fahrerassistenzsystems eines Kraftfahrzeugs wird insbesondere zumindest ein Objekt in einer Umgebung des Kraftfahrzeugs erfasst. Darüber hinaus werden bevorzugt fortlaufend eine Position und eine räumliche Abmessung des zumindest einen Objekts bestimmt und das Fahrerassistenzsystem wird in Abhängigkeit von der Position und der räumlichen Abmessung des zumindest einen Objekts betrieben. Ferner wird bevorzugt anhand der Position und der räumlichen Abmessung des zumindest einen Objekts fortlaufend zumindest ein blockierter Lenkwinkelbereich bestimmt, wobei Lenkwinkel des Kraftfahrzeugs in dem zumindest einen blockierten Lenkwinkelbereich zu einer Kollision mit dem zumindest einen Objekt führen, und das Fahrerassistenzsystem wird insbesondere in Abhängigkeit von dem zumindest einen blockierten Lenkwinkelbereich betrieben.

Ein erfindungsgemäßes Verfahren dient zum Betreiben eines Fahrerassistenzsystems eines Kraftfahrzeugs. Hierbei wird zumindest ein Objekt in einer Umgebung des Kraftfahrzeugs erfasst. Des Weiteren werden fortlaufend eine Position und eine räumliche Abmessung des zumindest einen Objekts bestimmt und das Fahrerassistenzsystem wird in Abhängigkeit von der Position und der räumlichen Abmessung des zumindest einen Objekts betrieben. Anhand der Position und der räumlichen Abmessung des zumindest einen Objekts wird fortlaufend zumindest ein blockierter Lenkwinkelbereich bestimmt, wobei Lenkwinkel des Kraftfahrzeugs in dem zumindest einen blockierten Lenkwinkelbereich zu einer Kollision mit dem zumindest einen Objekt führen. Ferner wird das Assistenzsystem in Abhängigkeit von dem zumindest einen blockierten Lenkwinkelbereich betrieben.

Mit Hilfe des Verfahrens soll ein Fahrerassistenzsystem betrieben werden, welches einen Fahrer beim Führen des Kraftfahrzeugs unterstützt. Hierbei wird in der Umgebung des Kraftfahrzeugs zumindest ein Objekt erfasst. Dies kann beispielsweise mit entsprechenden Sensoren des Fahrerassistenzsystems, Ultraschallsensoren, Radarsensoren, Laserscannern, Lidar-Sensoren oder Kameras erfolgen. Dabei kann das zumindest eine Objekt mit zumindest einem Sensor des Fahrerassistenzsystems in zeitlich aufeinanderfolgenden Messzyklen erfasst werden. Es kann auch vorgesehen sein, dass das zumindest eine Objekt mit zwei Sensoren des Fahrerassistenzsystems erfasst wird. Somit kann die Position des Objekts in der Umgebung des Kraftfahrzeugs bzw. die relative Lage zwischen dem Kraftfahrzeug und dem zumindest einen Objekt bestimmt werden. Mit Hilfe der Sensoren des Fahrerassistenzsystems können zudem die räumlichen Abmessungen des zumindest einen Objekts bestimmt werden. Hierbei ist es nicht zwingend erforderlich, dass sämtliche räumliche Abmessungen des zumindest einen Objekts bestimmt werden. Insbesondere ist es ausreichend, dass die räumlichen Abmessungen zumindest einer Seite des Objekts, welche dem Kraftfahrzeug zugewandt sind, bestimmt werden. Als die räumlichen Abmessungen kann beispielsweise eine Breite des Objekts bestimmt werden. Insbesondere kann die räumliche Erstreckung senkrecht zu einer Fahrtrichtung des Kraftfahrzeugs bestimmt werden. Anhand der Position und der räumlichen Abmessung des zumindest einen Objekts kann nun das Fahrerassistenzsystem des Kraftfahrzeugs betrieben werden. Insbesondere kann das Fahrerassistenzsystem das Kraftfahrzeug so steuern, dass dieses kollisionsfrei an dem zumindest einen Objekt vorbeibewegt wird.

Erfindungsgemäß ist es nun vorgesehen, dass anhand der Position und der räumlichen Abmessung des zumindest einen Objekts fortlaufend zumindest ein blockierter Lenkwinkelbereich bestimmt wird. Dieser blockierte Lenkwinkelbereich beschreibt diejenigen Lenkwinkel, welche zu einer Kollision mit dem zumindest einen Objekt führen. Wenn also ein Lenkwinkel innerhalb des Lenkwinkelbereichs eingestellt wird, droht eine Kollision zwischen dem Kraftfahrzeug und dem zumindest einen Objekt. Dieser zumindest eine blockierte Lenkwinkelbereich wird nun fortlaufend auf Grundlage der Position des zumindest einen Objekts und der räumlichen Abmessungen des zumindest einen Objekts aktualisiert. Zur Bestimmung des blockierten Lenkwinkelbereichs können fortlaufend Bewegungsbahnen bestimmt werden, welche die Bewegung des Kraftahrzeugs an dem Objekt vorbei beschreiben. Beispielsweise kann ein erster blockierter Lenkwinkel bestimmt werden, welcher den minimalen Lenkwinkel beschreibt, mit dem das Kraftfahrzeug an einer ersten Seite des Objekts vorbeibewegt werden kann. Zudem kann ein zweiter blockierter Lenkwinkel bestimmt werden, welcher den minimalen Lenkwinkel beschreibt, mit dem das Kraftfahrzeug an einer der ersten Seite, gegenüberliegenden zweiten Seite des Objekts vorbeibewegt werden kann. Der blockierte Lenkwinkelbereich beschreibt dann die Lenkwinkel zwischen dem ersten blockierten Lenkwinkel und dem zweiten blockierten Lenkwinkel. Mit dem blockierten Lenkwinkelbereich stehen dem Fahrerassistenzsystem beispielsweise Informationen zur Verfügung, welche Lenkwinkel in Abhängigkeit von den Objekten in der Umgebung des Kraftfahrzeugs eingestellt werden dürfen. Ferner steht dem Fahrerassistenzsystem die Information zur Verfügung, welche blockierten Lenkwinkelbereiche zu einer Kollision mit den Objekten führen. Da beispielsweise nur überprüft werden muss, ob sich der aktuelle Lenkwinkel des Kraftfahrzeugs innerhalb des zumindest einen blockierten Lenkwinkelbereichs befindet, kann das Fahrerassistenzsystem mit sehr geringem Rechenaufwand betrieben werden.

Bevorzugt wird zumindest ein von dem zumindest einen blockierten Lenkwinkelbereich verschiedener, freier Lenkwinkelbereich bestimmt. Als der zumindest eine freie Lenkwinkelbereich werden alle Lenkwinkel verstanden, bei deren Einstellung das Kraftfahrzeug kollisionsfrei an dem zumindest einen Objekt vorbeibewegt werden kann. Somit kann beispielsweise von dem Fahrerassistenzsystem eine einfache Unterscheidung durchgeführt werden, ob sich der aktuelle Lenkwinkel des Kraftfahrzeugs in dem freien oder in dem blockierten Lenkwinkelbereich befindet. Diese Unterscheidung kann innerhalb einer kurzen Rechenzeit getroffen werden. Dies ermöglicht ebenfalls, dass das Fahrerassistenzsystem innerhalb einer kurzen zeitlichen Dauer angesteuert werden kann. Dies ermöglicht es beispielsweise, den Lenkwinkel von dem blockierten Lenkwinkelbereich zu dem freien Lenkwinkelbereich zu ändern oder andere kollisionsvermeidende Maßnahmen einzuleiten.

In einer Ausführungsform wird ein erstes und zumindest ein zweites Objekt in der Umgebung des Kraftfahrzeugs erfasst, anhand der Position und der räumlichen Abmessung des ersten Objekts wird ein erster blockierter Lenkwinkelbereich und anhand der Position und den räumlichen Abmessung des zumindest einen zweiten Objekts wird ein zweiter blockierter Lenkwinkelbereich bestimmt. Wenn mehrere Objekte in der Umgebung des Kraftfahrzeugs erfasst werden, kann für jedes dieser Objekte auf Grundlage der Position des jeweiligen Objekts und der räumlichen Abmessungen des jeweiligen Objekts ein blockierter Lenkwinkelbereich bestimmt werden. Nachdem die blockierten Lenkwinkelbereiche auf Grundlage der Objekte in der Umgebung des Kraftfahrzeugs bestimmt wurden, können auch die freien Lenkwinkelbereiche auf einfache Weise ermittelt werden. Somit stehen auf einfache Weise die Informationen zur Verfügung, um das Kraftfahrzeug kollisionsfrei an den Objekten vorbeizuführen. Somit ist es nicht erforderlich, zeitaufwendige Berechnungen für den Betrieb des Fahrerassistenzsystems durchzuführen.

Bevorzugt wird überprüft, ob zwischen dem ersten blockierten Lenkwinkelbereich und dem zweiten blockierten Lenkwinkelbereich ein für eine Bewegung des Kraftfahrzeugs zwischen dem ersten Objekt und dem zumindest einen zweiten Objekt ausreichender freier Lenkwinkelbereich vorhanden ist. Wenn zumindest zwei Objekte in der Umgebung des Kraftfahrzeugs erfasst wurden, und der jeweilige blockierte Lenkwinkelbereich für jedes der Objekte bestimmt wurde, kann zunächst überprüft werden, ob zwischen diesen beiden blockierten Lenkwinkelbereichen ein freier Lenkwinkelbereich vorhanden ist. Falls ein freier Lenkwinkelbereich vorhanden ist, kann überprüft werden, ob dieser ausreichend ist, um das Kraftfahrzeug zwischen dem ersten und dem zweiten Objekt hindurchzubewegen. Bei der Beurteilung, ob der freie Lenkwinkelbereich zwischen den blockierten Lenkwinkelbereichen ausreichend groß ist, können die äußeren Abmessungen des Kraftfahrzeugs berücksichtigt werden. Somit kann beispielsweise auf einfache Weise ermittelt werden, ob zwischen den zwei Objekten ein Korridor vorhanden ist, durch welchen das Kraftfahrzeug kollisionsfrei an den Objekten vorbeibewegt werden kann.

In einer weiteren Ausführungsform werden der erste blockierte Lenkwinkelbereich und der zweite blockierte Lenkwinkelbereich zusammengelegt, falls für die Bewegung des Kraftfahrzeugs zwischen dem ersten Objekt und dem zumindest einen zweiten Objekt kein ausreichend freier Lenkwinkelbereich vorhanden ist. Wenn zwischen zwei blockierten Lenkwinkelbereichen kein freier Lenkwinkelbereich vorhanden ist oder falls ein freier Lenkwinkelbereich vorhanden ist und dieser nicht ausreichen ist, um das Kraftfahrzeug zwischen den beiden Objekten hindurchzubewegen, werden die blockierten Lenkwinkelbereiche zusammengelegt. In gleicher Weise können blockierte Lenkwinkelbereiche zusammengelegt werden, wenn sich diese überlappen. Somit wird die Anzahl an blockierten bzw. freien Lenkwinkelbereichen, welche bei dem Betrieb des Fahrerassistenzsystems berücksichtigt werden, reduziert.

Vorzugsweise wird ein Unterschied zwischen einem aktuellen Lenkwinkel des Kraftfahrzeugs und dem zumindest einen blockierten Lenkwinkelbereich bestimmt und eine Rückmeldung an einen Fahrer des Kraftfahrzeugs wird in Abhängigkeit von dem Unterschied ausgegeben. Grundsätzlich kann überprüft werden, ob sich der aktuelle Lenkwinkel des Kraftfahrzeugs in dem freien Lenkwinkelbereich oder in dem blockierten Lenkwinkelbereich befindet. Falls sich der aktuelle Lenkwinkel in dem blockierten Lenkwinkelbereich befindet, kann beispielsweise eine entsprechende Warnung an den Fahrer ausgegeben werden. Diese Warnung kann beispielsweise akustisch, optisch und/oder haptisch ausgegeben werden. Mit der Warnung kann der Fahrer des Kraftfahrzeugs darauf hingewiesen werden, dass eine Kollision mit dem Objekt droht. Wenn sich der aktuelle Lenkwinkel des Kraftfahrzeugs in dem freien Lenkwinkelbereich befindet, kann eine Entfernung zu dem blockierten Lenkwinkelbereich bestimmt werden. In Abhängigkeit von der Entfernung bzw. dem Unterschied des aktuellen Lenkwinkels zu dem blockierten Lenkwinkelbereich kann dann eine Intensität der Rückmeldung oder einer Warnstufe der Warnung angepasst werden. Hierbei kann es auch vorgesehen sein, dass als Rückmeldung eine entsprechende Kraft bzw. ein Drehmoment auf das Lenkrad des Kraftfahrzeugs ausgeübt wird. Somit kann beispielsweise verhindert werden, dass der Fahrer den Lenkwinkel von dem freien Lenkwinkelbereich in dem blockierten Lenkwinkelbereich ändert. Dies ermöglicht insgesamt einen sicheren Betrieb des Kraftfahrzeugs.

Weiterhin ist es vorteilhaft, wenn der zumindest eine blockierte Lenkwinkelbereich in Abhängigkeit von einer aktuellen Geschwindigkeit des Kraftfahrzeugs bestimmt wird. Beispielsweise kann es vorgesehen sein, dass dem blockierten Lenkwinkelbereich ein geschwindigkeitsabhängiger Offset hinzugefügt wird. Somit kann berücksichtigt werden, dass beispielsweise bei niedrigeren Fahrgeschwindigkeiten größere Lenkwinkeländerungen möglich sind als bei höheren Fahrgeschwindigkeiten. Zudem kann eine Reaktionszeit des Fahrers berücksichtigt werden. Grundsätzlich kann es auch vorgesehen sein, dass ein vorbestimmter Sicherheitsabstand, welcher um das zumindest eine Objekt herum definiert wird, bei der Bestimmung des blockierten Lenkwinkelbereichs berücksichtigt wird. Somit kann beispielsweise erreicht werden, dass das Kraftfahrzeug kollisionsfrei an dem Objekt vorbeibewegt werden kann. Des Weiteren kann bei der Bestimmung des blockierten Lenkwinkelbereichs berücksichtigt werden, ob das Kraftfahrzeug eine Hinterachslenkung aufweist oder nicht.

Erfindungsgemäß wird das zumindest eine Objekt in der Umgebung des Kraftfahrzeugs klassifiziert und das Fahrerassistenzsystem wird in Abhängigkeit von der Klassifizierung des zumindest einen Objekts betrieben. Beispielsweise kann das zumindest eine Objekt bzw. die Objekte dahingehend klassifiziert werden, wie kritisch diese bei kollisionsvermeidenden Maßnahmen sind. Hierbei kann beispielsweise zwischen anderen Verkehrsteilnehmern, beispielsweise Fahrzeugen, Fußgängern oder dergleichen, und statischen Objekten unterschieden werden. Hierbei kann beispielsweise berücksichtigt werden, dass eine Kollision mit weiteren Verkehrsteilnehmern möglichst verhindert werden soll. Weiterhin werden gemäß der Erfindung die Objekte anhand ihrer Höhe klassifiziert. Ferner wird bestimmt, ob ein Objekt überfahren werden kann, weil es verhältnismäßig niedrig ist. Des Weiteren können die Objekte bezüglich ihres Abstands zu dem Kraftfahrzeug klassifiziert werden.

Weiterhin ist es vorteilhaft, wenn das Kraftfahrzeug mittels des Fahrerassistenzsystems zumindest semi-autonom manövriert wird, wobei mit dem Fahrerassistenzsystem ein von dem zumindest einen blockierten Lenkwinkelbereich verschiedener Lenkwinkel vorgegeben wird. Dabei kann es vorgesehen sein, dass das Kraftfahrzeug semi-autonom manövriert wird. Hierbei wird von dem Fahrerassistenzsystem ein Eingriff in die Lenkung vorgenommen. Dabei wird der Lenkwinkel des Kraftfahrzeugs so eingestellt, dass sich der Lenkwinkel in dem freien Lenkwinkelbereich befindet. Es kann auch vorgesehen sein, dass das Kraftfahrzeug vollautonom manövriert wird. In diesem Fall übernimmt das Fahrerassistenzsystem ferner einen Eingriff in einen Antriebsmotor und eine Bremse des Kraftfahrzeugs. Auf Grundlage des zumindest einen blockierten Lenkwinkelbereichs kann das Kraftfahrzeug sicher und zuverlässig manövriert werden.

Ein erfindungsgemäßes Fahrerassistenzsystem für ein Kraftfahrzeug ist zum Durchführen eines erfindungsgemäßen Verfahrens ausgelegt. Das Fahrerassistenzsystem kann beispielsweise eine Mehrzahl von Sensoren umfassen, mit denen das zumindest eine Objekt in der Umgebung des Kraftfahrzeugs erfasst werden kann. Darüber hinaus kann das Fahrerassistenzsystem eine Steuereinrichtung aufweisen, die beispielsweise durch ein elektronisches Steuergerät des Kraftfahrzeugs gebildet sein kann. Mit Hilfe der Steuereinheit kann auf Grundlage der Sensordaten, die mit den Sensoren bereitgestellt werden, die Position des Objekts und/oder die räumlichen Abmessungen bestimmt werden. Ferner können mit Hilfe der Steuereinrichtung der zumindest eine blockierte Lenkwinkelbereich und der zumindest eine freie Lenkwinkelbereich bestimmt werden. Ein erfindungsgemäßes Kraftfahrzeug umfasst ein erfindungsgemäßes Fahrerassistenzsystem. Das Kraftfahrzeug ist insbesondere als Personenkraftwagen ausgebildet.

Die mit Bezug auf das erfindungsgemäße Verfahren vorgestellten bevorzugten Ausführungsformen und deren Vorteile gelten entsprechend für das erfindungsgemäße Fahrerassistenzsystem sowie für das erfindungsgemäße Kraftfahrzeug.

Weitere Merkmale der Erfindung ergeben sich aus den Ansprüchen, den Figuren und der Figurenbeschreibung.

Die Erfindung wird nun anhand von bevorzugten Ausführungsbeispielen sowie unter Bezugnahme auf die beigefügten Zeichnungen näher erläutert.

Dabei zeigen:
- Fig. 1: ein Kraftfahrzeug gemäß einer Ausführungsform der vorliegenden Erfindung, welches ein Fahrerassistenzsystem aufweist;
- Fig. 2: das Kraftfahrzeug, in dessen Umgebung sich ein Objekt befindet, sowie ein blockierter Lenkwinkelbereich, der in Abhängigkeit von dem Objekt bestimmt wurde;
- Fig. 3: das Kraftfahrzeug, in dessen Umgebung sich zwei Objekte befinden, sowie in blockierter Lenkwinkelbereich, der in Abhängigkeit von den zwei Objekten bestimmt wurde; und
- Fig. 4: das Kraftfahrzeug, in dessen Umgebung sich zwei Objekte befinden sowie zwei blockierte Lenkwinkelbereiche, die in Abhängigkeit von den Objekten bestimmt wurden.

In den Figuren werden gleiche und funktionsgleiche Elemente mit den gleichen Bezugszeichen versehen.

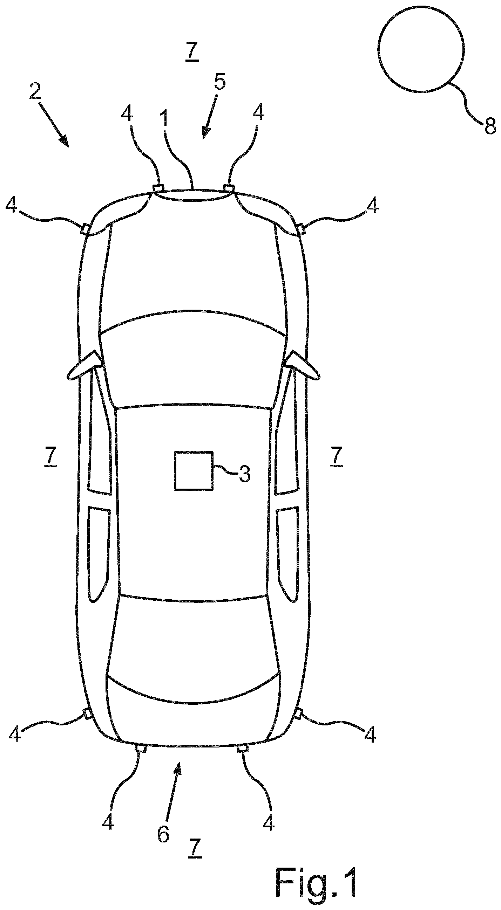

Fig. 1 zeigt ein Kraftfahrzeug 1 gemäß einer Ausführungsform der vorliegenden Erfindung in einer Draufsicht. Das Kraftfahrzeug 1 ist vorliegend als Personenkraftwagen ausgebildet. Das Kraftfahrzeug 1 umfasst ein Fahrerassistenzsystem 2, welches einen Fahrer beim Führen des Kraftfahrzeugs 1 unterstützt.

Das Fahrerassistenzsystem 2 umfasst eine Mehrzahl von Sensoren 4, welche verteilt an dem Kraftfahrzeug 1 angeordnet sind. Dabei sind vier Sensoren 4 in einem Frontbereich 5 und vier Sensoren 4 in einem Heckbereich 6 des Kraftfahrzeugs 1 angeordnet. Bei den Sensoren 4 kann es sich beispielsweise um Ultraschallsensoren handeln. Mit Hilfe der Sensoren 4 können Objekte 8 in einer Umgebung 7 des Kraftfahrzeugs 1 erfasst werden. Das Fahrerassistenzsystem 2 umfasst ferner eine Steuereinrichtung 3, welche zur Datenübertragung mit den Sensoren 4 verbunden ist. Entsprechende Datenleitungen sind vorliegend der Übersichtlichkeit halber nicht dargestellt. Mit Hilfe der Steuereinrichtung 3 können die Sensordaten, die mit den Sensoren 4 bereitgestellt werden, ausgewertet werden.

Mit Hilfe der Sensoren 4 kann beispielsweise in zeitlich aufeinanderfolgenden Messzyklen jeweils der Abstand zwischen dem jeweiligen Sensor 4 und dem Objekt 8 bestimmt werden. Anhand der zeitlich aufeinanderfolgenden Messungen bei einer Bewegung des Kraftfahrzeugs 1 relativ zu dem Objekt 8 und/oder anhand der Messungen der unterschiedlichen Sensoren 4 kann dann eine relative Lage zwischen dem Kraftfahrzeug 1 und dem Objekt 8 bzw. eine Position des Objekts 8 bestimmt werden. Anhand der Sensordaten, die mit den Sensoren 4 bereitgestellt werden, kann ferner eine räumliche Abmessung 9 des Objekts 8 bestimmt werden. Beispielsweise kann eine Breite und/oder eine Höhe des Objekts 8 bestimmt werden. Insbesondere kann die räumlichen Abmessung 9 zumindest einer Fläche bzw. einer Seite des Objekts 8 bestimmt werden, welche dem Kraftfahrzeug 1 bzw. den Sensoren 4 zugewandt ist.

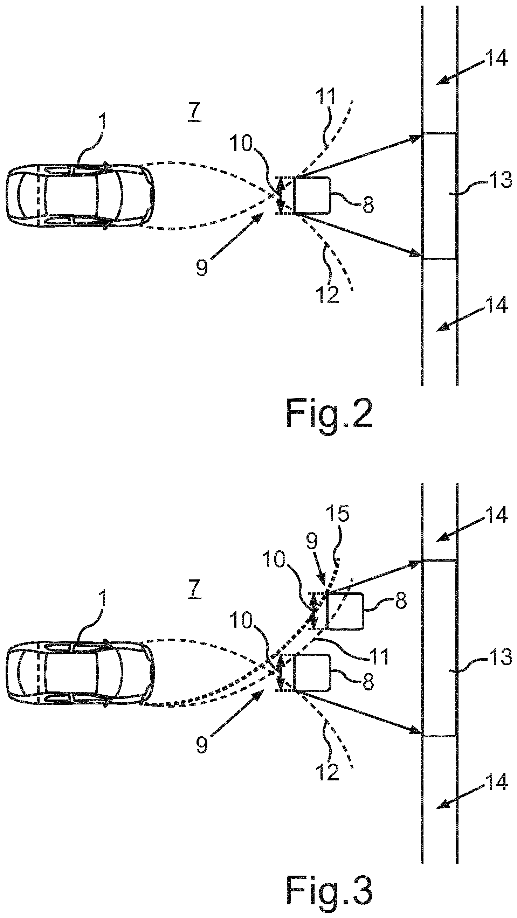

Fig. 2 zeigt das Kraftfahrzeug 1, in dessen Umgebung sich das Objekt 8 befindet. Vorliegend befindet sich das Objekt 8 in Fahrtrichtung vor dem Kraftfahrzeug 1. Während der Bewegung des Kraftfahrzeugs 1 relativ zu dem Objekt 8 wird fortlaufend die Position des Objekts 8 bzw. die relative Lage zwischen dem Kraftfahrzeug 1 und dem Objekt 8 bestimmt. Darüber hinaus wird die räumliche Abmessung 9 des Objekts 8 bestimmt. Vorliegend wird als die räumliche Abmessung eine Breite 10 des Objekts 8 bestimmt. Dabei wird die Breite 10 des Objekts 8 bestimmt, welche dem Kraftfahrzeug 1 zugewandt ist bzw. welche sich im Wesentlichen senkrecht zu der Fahrtrichtung des Kraftfahrzeugs 1 erstreckt.

Anhand der relativen Lage zwischen dem Kraftfahrzeug 1 und dem Objekt 8 sowie der räumlichen Abmessung 9 des Objekts 8 können Bewegungsbahnen 11, 12 bestimmt werden, welche jeweils eine Bewegung des Kraftfahrzeugs 1 an dem Objekt 8 vorbei beschreiben. Dabei beschreibt die Bewegungsbahn 11 die Bewegung der rechten Frontseite des Kraftfahrzeugs 1 bei der Einstellung eines ersten blockierten Lenkwinkels. Bei der Einstellung des ersten blockierten Lenkwinkels kann die rechte Frontseite in einem minimalen Abstand oder in einem vorbestimmten Sicherheitsabstand an dem Objekt 8 vorbeibewegt werden. Die Bewegungsbahn 12 beschreibt die Bewegung der linken Frontseite des Kraftfahrzeugs 1 bei der Einstellung eines zweiten blockierten Lenkwinkels. Bei der Einstellung des zweiten blockierten Lenkwinkels kann die linke Frontseite in einem minimalen Abstand oder in einem vorbestimmten Sicherheitsabstand an dem Objekt 8 vorbeibewegt werden. Die Bewegungsbahnen 11, 12 können mit Hilfe der Steuereinrichtung 3 auf Grundalge der Position des Objekts 8 und der räumlichen Abmessung 9 des Objekts 8 bestimmt werden. Ferner können die äußeren Abmessungen des Kraftfahrzeugs 1 zur Bestimmung der Bewegungsbahnen 11, 12 herangezogen werden. Die äußeren Abmessungen des Kraftfahrzeugs 1 können beispielsweise in einer Speichereinheit der Steuereinrichtung 3 hinterlegt sein.

Aus dem ersten blockierten Lenkwinkel und dem zweiten blockierten Lenkwinkel kann dann ein blockierter Lenkwinkelbereich 13 bestimmt werden. Der blockierte Lenkwinkelbereich 13 beschreibt die Lenkwinkel zwischen dem ersten blockierten Lenkwinkel und dem zweiten blockierten Lenkwinkel einschließlich des ersten und des zweiten blockierten Lenkwinkels. Dieser blockierte Lenkwinkelbereich 13 beschreibt diejenigen Lenkwinkel, welche zu einer Kollision mit dem Objekt 8 führen. Die Lenkwinkelbereiche, welche von dem blockierten Lenkwinkelbereich 13 verschieden sind, werden als freie Lenkwinkelbereiche 14 bezeichnet. Wenn ein Lenkwinkelbereich in dem freien Lenkwinkelbereich 14 eingestellt wird, kann das Kraftahrzeug 1 kollisionsfrei an dem Objekt 8 vorbeibewegt werden.

Fig. 3 zeigt das Kraftfahrzeug 1, in dessen Umgebung 7 sich zwei Objekte 8 befinden. Hierbei ist es vorgesehen, dass für jedes der Objekte 8 auf Grundlage der jeweiligen Position des Objekts 8 und der räumlichen Abmessung 9 des Objekts 8 ein blockierter Lenkwinkelbereich 13 bestimmt wird. Vorliegend ist zudem eine Bewegungsbahn 15 dargestellt, welche die Bewegung der rechten Frontseite des Kraftfahrzeugs 1 bei Einstellung eines blockierten Lenkwinkels an dem Objekt 8 vorbei beschreibt. Vorliegend überlagern sich die jeweiligen blockierten Lenkwinkelbereiche, die auf Grundlage der beiden Objekte 8 bestimmt wurden. Daher sind die beiden blockierten Lenkwinkelbereiche zu einem gemeinsamen blockierten Lenkwinkelbereich 13 zusammengefügt.

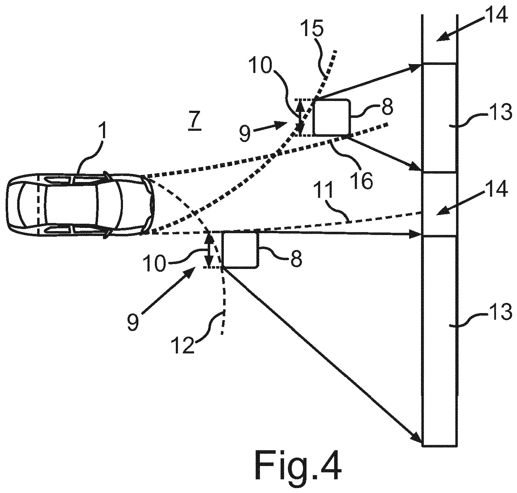

Fig. 4 zeigt das Kraftfahrzeug 1 in dessen Umgebung 7 sich zwei Objekte 8 befinden. Auch hier werden für jedes der Objekte 8 auf Grundlage der Position und der räumlichen Abmessungen 9 die jeweiligen Bewegungsbahnen 11, 12 sowie die Bewegungsbahnen 15, 16 bestimmt. Anhand der Bewegungsbahnen 11, 12 sowie der Bewegungsbahnen 15, 16 können dann die jeweiligen blockierten Lenkwinkelbereiche 13 bestimmt werden. Vorliegend ergibt sich zwischen den beiden blockierten Lenkwinkelbereichen 13 ein freier Lenkwinkelbereich 14, welcher ausreichend ist, um das Kraftfahrzeug 1 zwischen den beiden Objekten 8 hindurchzubewegen. Anhand des freien Lenkwinkelbereichs 14 zwischen den beiden blockierten Lenkwinkelbereichen 13 kann also ein Korridor bestimmt werden, entlang dem das Kraftfahrzeug 1 zwischen den beiden Objekten 8 hindurchbewegt werden kann. In diesem Fall werden die beiden blockierten Lenkwinkelbereiche 13 nicht zusammengelegt.

Das Fahrerassistenzsystem 2 des Kraftfahrzeugs 1 kann auf Grundlage der Information über den blockierten Lenkwinkelbereich 13 und den freien Lenkwinkelbereich 14 manövriert werden. Beispielsweise kann eine Warnung an den Fahrer des Kraftfahrzeugs 1 ausgegeben werden, falls sich der aktuelle Lenkwinkel des Kraftfahrzeugs 1 in dem blockierten Lenkwinkelbereich 13 befindet. Es kann auch ein Abstand des aktuellen Lenkwinkels zu dem blockierten Lenkwinkelbereich 13 bestimmt werden und eine Warnung an den Fahrer in Abhängigkeit von dem Abstand ausgegeben werden. Ferner kann es vorgesehen sein, dass eine kollisionsvermeidende Maßnahme auf Grundlage des blockierten Lenkwinkelbereichs 13 eingeleitet wird. Beispielsweise kann mit dem Fahrerassistenzsystem 2 aktiv in die Lenkung des Kraftfahrzeugs 1 eingegriffen werden. Es kann auch vorgesehen sein, dass das Fahrerassistenzsystem 2 das Kraftfahrzeug 1 zumindest semi-autonom auf Grundlage der Information über den blockierten Lenkwinkelbereich 13 und den freien Lenkwinkelbereich 14 manövriert.

## Patentansprüche

1. Verfahren zum Betreiben eines Fahrerassistenzsystems (2) eines Kraftfahrzeugs (1), bei welchem zumindest ein Objekt (8) in einer Umgebung (7) des Kraftfahrzeugs (1) erfasst wird, fortlaufend eine Position und eine räumliche Abmessung (9) des zumindest einen Objekts (8) bestimmt werden, und das Fahrerassistenzsystem in Abhängigkeit von der Position und der räumlichen Abmessung (9) des zumindest einen Objekts (8) betrieben wird,
wobei anhand der Position und der räumlichen Abmessung (9) des zumindest einen Objekts (8) fortlaufend zumindest ein blockierter Lenkwinkelbereich (13) bestimmt wird, wobei Lenkwinkel des Kraftfahrzeugs (1) in dem zumindest einen blockierten Lenkwinkelbereich (13) zu einer Kollision mit dem zumindest einen Objekt (8) führen, und das Fahrerassistenzsystem (2) in Abhängigkeit von dem zumindest einen blockierten Lenkwinkelbereich (13) betrieben wird,
wobei zumindest eine Objekt (8) in der Umgebung (7) des Kraftfahrzeugs (1) klassifiziert wird und das Fahrerassistenzsystem (2) in Abhängigkeit von der Klassifizierung des zumindest einen Objekts (8) betrieben wird, **dadurch gekennzeichnet, dass** die Objekte anhand ihrer Höhe klassifiziert werden und bestimmt wird, ob das Objekt überfahren werden kann, weil das Objekt verhältnismäßig niedrig ist.

2. Verfahren nach Anspruch 1
**dadurch gekennzeichnet, dass**
zumindest ein vom dem zumindest einen blockierten Lenkwinkelbereich (13) verschiedener, freier Lenkwinkelbereich (14) bestimmt wird.

3. Verfahren nach Anspruch 1 oder 2,
**dadurch gekennzeichnet, dass**
ein erstes und zumindest ein zweites Objekt (8) in der Umgebung (7) des Kraftfahrzeugs (1) erfasst werden, anhand der Position und der räumlichen Abmessung (9) des ersten Objekts (8) ein erster blockierter Lenkwinkelbereich (13) und anhand der Position und der räumlichen Abmessung (9) des zumindest einen zweiten Objekts (8) ein zweiter blockierter Lenkwinkelbereich (13) bestimmt werden.

4. Verfahren nach Anspruch 3,
**dadurch gekennzeichnet, dass**
überprüft wird, ob zwischen dem ersten und dem zweiten blockierten Lenkwinkelbereich (13) ein für eine Bewegung des Kraftfahrzeugs (1) zwischen dem ersten und dem zumindest einen zweiten Objekt (8) ausreichender freier Lenkwinkelbereich (14) vorhanden ist.

5. Verfahren nach Anspruch 4,
**dadurch gekennzeichnet, dass**
der erste und der zweite blockierte Lenkwinkelbereich (14) zusammengelegt werden, falls für die Bewegung des Kraftfahrzeugs (1) zwischen dem ersten und dem zumindest einen zweiten Objekt (8) kein ausreichender freier Lenkwinkelbereich (14) vorhanden ist.

6. Verfahren nach einem der vorhergehenden Ansprüche,
**dadurch gekennzeichnet, dass**
ein Unterschied zwischen einen aktuellen Lenkwinkel des Kraftfahrzeugs (1) und dem zumindest einen blockierten Lenkwinkelbereich (13) bestimmt wird und eine Rückmeldung an einen Fahrer des Kraftfahrzeugs (1) in Abhängigkeit von dem Unterschied ausgegeben wird.

7. Verfahren nach einem der vorhergehenden Ansprüche,
**dadurch gekennzeichnet, dass**
der zumindest eine blockierte Lenkwinkelbereich (13) in Abhängigkeit von einer aktuellen Geschwindigkeit des Kraftfahrzeugs (1) bestimmt wird.

8. Verfahren nach einem der vorhergehenden Ansprüche,
**dadurch gekennzeichnet, dass**
das Kraftfahrzeug (1) mittels des Fahrerassistenzsystems (2) zumindest semi-autonom manövriert wird, wobei mit dem Fahrerassistenzsystem (2) ein von dem zumindest einen blockierten Lenkwinkelbereich (13) verschiedener Lenkwinkel vorgegeben wird.

9. Fahrerassistenzsystem (2) für ein Kraftfahrzeug (1), welches zum Durchführen eines Verfahrens nach einem der vorhergehenden Ansprüche ausgelegt ist.

10. Kraftfahrzeug (1) mit einem Fahrerassistenzsystem (2) nach Anspruch 9.

## Claims

1. Method for operating a driver assistance system (2) of a motor vehicle (1), in which method at least one object (8) is detected in an area (7) surrounding the motor vehicle (1), a position and a spatial dimension (9) of the at least one object (8) are continuously determined, and the driver assistance system is operated depending on the position and the spatial dimension (9) of the at least one object (8),
wherein at least one blocked steering angle range (13) is continuously determined on the basis of the position and the spatial dimension (9) of the at least one object (8), wherein steering angles of the motor vehicle (1) in the at least one blocked steering angle range (13) lead to a collision with the at least one object (8), and the driver assistance system (2) is operated depending on the at least one blocked steering angle range (13),
wherein at least one object (8) in the area (7) surrounding the motor vehicle (1) is classified and the driver assistance system (2) is operated depending on the classification of the at least one object (8), **characterized in that** the objects are classified on the basis of their height and a determination is made as to whether the object can be driven over because the object is relatively low.

2. Method according to Claim 1,
**characterized in that**
at least one free steering angle range (14) which is different from the at least one blocked steering angle range (13) is determined.

3. Method according to Claim 1 or 2,
**characterized in that**
a first and at least one second object (8) in the area (7) surrounding the motor vehicle (1) are detected, a first blocked steering angle range (13) is determined on the basis of the position and the spatial dimension (9) of the first object (8) and a second blocked steering angle range (13) is determined on the basis of the position and the spatial dimension (9) of the at least one second object (8).

4. Method according to Claim 3,
**characterized in that**
a check is made as to whether there is, between the first and the second blocked steering angle range (13), a free steering angle range (14) which is sufficient for the motor vehicle (1) to move between the first and the at least one second object (8).

5. Method according to Claim 4,
**characterized in that**
the first and the second blocked steering angle range (14) are merged if there is not a sufficient free steering angle range (14) for the motor vehicle (1) to move between the first and the at least one second object (8).

6. Method according to one of the preceding claims,
**characterized in that**
a difference between a current steering angle of the motor vehicle (1) and the at least one blocked steering angle range (13) is determined and feedback is output to a driver of the motor vehicle (1) depending on the difference.

7. Method according to one of the preceding claims,
**characterized in that**
the at least one blocked steering angle range (13) is determined depending on a current speed of the motor vehicle (1).

8. Method according to one of the preceding claims,
**characterized in that**
the motor vehicle (1) is at least semi-autonomously manoeuvred by means of the driver assistance system (2), wherein a steering angle which is different from the at least one blocked steering angle range (13) is specified by the driver assistance system (2).

9. Driver assistance system (2) for a motor vehicle (1), which driver assistance system is designed to carry out a method according to one of the preceding claims.

10. Motor vehicle (1) having a driver assistance system (2) according to Claim 9.

## Revendications

1. Procédé de mise en œuvre d'un système d'aide à la conduite (2) d'un véhicule automobile (1), procédé dans lequel au moins un objet (8) est détecté dans un environnement (7) du véhicule automobile (1), une position et une dimension spatiale (9) de l'au moins un objet (8) sont déterminées en continue, et le système d'aide à la conduite est mis en œuvre en fonction de la position et de la dimension spatiale (9) de l'au moins un objet (8),
au moins une plage d'angle de braquage bloqué (13) étant déterminée en continu sur la base de la position et de la dimension spatiale (9) de l'au moins un objet (8), des angles de braquage du véhicule automobile (1) dans l'au moins une plage d'angle de braquage bloquée (13) conduisant à une collision avec l'au moins un objet (8), et le système d'aide à la conduite (2) étant mis en œuvre en fonction de l'au moins une plage d'angle de braquage bloquée (13),
au moins un objet (8) dans l'environnement (7) du véhicule automobile (1) étant classé et le système d'aide à la conduite (2) étant mis en œuvre en fonction du classement de l'au moins un objet (8), **caractérisé en ce que** les objets sont classés en fonction de leur hauteur et l'on détermine si l'on peut passer pardessus l'objet parce que l'objet est relativement bas.

2. Procédé selon la revendication 1,
**caractérisé en ce que**
au moins une plage d'angle de braquage libre (14), est déterminée qui est différente de l'au moins une plage d'angle de braquage bloquée (13).

3. Procédé selon la revendication 1 ou 2,
**caractérisé en ce que**
un premier et au moins un deuxième objet (8) sont détectés dans l'environnement (7) du véhicule automobile (1) en fonction de la position et de la dimension spatiale (9) du premier objet (8), une première plage d'angle de braquage bloquée (13) et, sur la base de la position et de la dimension spatiale (9) de l'au moins un deuxième objet (8), une deuxième plage d'angle de braquage bloquée (13) sont déterminées.

4. Procédé selon la revendication 3,
**caractérisé en ce que**
l'on vérifie s'il y a entre la première et la deuxième plage d'angle de braquage bloquée (13) une plage d'angle de braquage libre (14) suffisante pour le déplacement du véhicule automobile (1) entre la première et l'au moins un deuxième objet (8).

5. Procédé selon la revendication 4,
**caractérisé en ce que**
la première et la deuxième plage d'angle de braquage bloquée (14) sont combinées s'il n'y a pas de plage d'angle de braquage libre (14) suffisante pour le déplacement du véhicule automobile (1) entre le premier et l'au moins un deuxième objet (8).

6. Procédé selon l'une des revendications précédentes,
**caractérisé en ce que**
une différence entre un angle de braquage actuel du véhicule automobile (1) et l'au moins une plage d'angle de braquage bloquée (13) est déterminée et un message de retour est délivré à un conducteur du véhicule automobile (1) en fonction de la différence.

7. Procédé selon l'une des revendications précédentes, **caractérisé en ce que** l'au moins une plage d'angle de braquage bloquée (13) est déterminée en fonction d'une vitesse actuelle du véhicule automobile (1) .

8. Procédé selon l'une des revendications précédentes,
**caractérisé en ce que**
le véhicule automobile (1) est manoeuvré de manière au moins semi-autonome au moyen du système d'aide à la conduite (2), le système d'aide à la conduite (2) spécifiant un angle de braquage différent de l'au moins une plage d'angle de braquage bloquée (13).

9. Système d'aide à la conduite (2) destiné à véhicule automobile (1), lequel système est conçu pour mettre en œuvre un procédé selon l'une des revendications précédentes.

10. Véhicule automobile (1) comprenant un système d'aide à la conduite (2) selon la revendication 9.
